# EUROPEAN PATENT APPLICATION

(11) **EP 2 618 007 A1**
(43) Date of publication of application: **24.07.2013**
(21) Application number: 12460045.3
(22) Date of filing: 23.07.2012
(51) Int. Cl.: F16B 12/40, F16B 7/18

(54) **Joining of two rectangular elements**

(30) Priority: 19.01.2012 PL 39784212
(71) Applicant: Malecki, Bogdan, 63-830 Pepowo (PL)
(72) Inventor: Malecki, Bogdan, 63-830 Pepowo (PL)

(57) **Abstract**

Way of assembly of construction of a plane configuration and/or spatial, according to the invention, relying on placing one element into the other, characterised in that, one makes assembly by means of using, at least two elements (1) of the same profiles in a crosswise section, having shape of a rectangle (6) of the same overall dimensions (h, b), and lengths (L) corresponding to configuration being assembled. In a wall (5) of one element (1), which makes a sediment element (2), from the side, in which the second element (1) is to be placed one cuts out a through recess (3) of dimensions corresponding to outer dimensions (h, b) of element (1), which is to be joined, then in the sediment element (2) one places the second element (1) and one makes joint, advantageously separable, moreover the element (1), which is to be joined to the sediment element (2), one positions, during assembly in such position, that shorter sides with dimension (b) of the element (1), which is to be placed in the sediment element (2) take position parrallely towards a longer side (h) of the profile of the sediment element (2) in crosswise section.

A joining unit for assembly of constructions of a plane configuration and /or spatial, characterised in that it comprises at least two elements (1, 2) of the same profiles in a crosswise section, having shape of rectangle (6) of the same dimensons (h, b) in crosswise section. In each element (1, 2) of the joining unit distance (a) which makes inner dimension measured on the longer side (h) of a rectangle (6) is equal to the outer dimension (b) of the shorter side of the rectangle (6). In made joint, one of the elements (1) is placed , advantageously separably , in the other element (1) which makes a sediment element (2) for this joint , moreover in the wall (5) of the sediment element (2), from the side of element (1), which is placed in the sediment element (2) there is a through recess (3) of dimensions corresponding to outer dimensions (h, b) of element (1).

## Description

This invention relates to way of assembly of construction of a plane cofiguration and /or spatial, a joing unit for assembly of construction of a plane configuration and/or spatial and to a joining element for assembly of construction of a plane configuration and/or spatial. The invention enables making different types of one or multi plane construction.

It is known from patent application P.315648 constructional joint of elements of furniture , **characterised in that**, it contains a sediment body, in the upper part of which there is a recess of a shape and dimensions corresponding to crosswise section of a constructional element. This element is mounted in a recess sectionally shaped and separably. The constructional element has a perpendicular end which is inserted slidely into inner space of the sediment body. To achieve this type of joint one uses additional element in a shape of an end inserted slidely in the sediment body.

It is known from description of the utility model PL 56406Y1 a carrying profile of special , collapsible furniture, having shape of a through element of a crosswise section in a shape of a square. At inner side of walls there are splines situated at certain distances from corners.The profile is designed for making shop shelves, show-cases, exhibition stands, desks and tables.

As shown in German patent description DE 4135674 C1, construction of angular joint is made up of two profiles. Each of this profiles has shaped grooves situated on all sides and on the whole length of the profile. Grooves are opened outside at side of joint with a second profile.

Joint is made by joining profiles by a connector element which is placed with its body into the groove of one of the profile, and with a head into the groove of the other of profiles. Parts of the connector element are turned to each other causing in this way joining two profiles. After joint one profile adheres , by its frontal surface to a side surface of the second profile.

Way of assembly of construction of a plane configuration and/or spatial, according to the invention, relying on placing one element into the other, **characterised in that**, one makes assembly by means of using, at least two elements of the same profiles in a crosswise section, having shape of rectangles of lengths corresponding to configuration being assembled. In a wall of one element, which makes a sediment element, from the side, in which the second element is to be placed one cuts out a through recess of dimensions corresponding to outer dimensions of element, which is to be joined. The recess one cuts out in such a way , that after cutting out it takes position , in which shorter sides of the recess of dimension are situated parrallely towards a longer side of a profile of the sediment element in a crosswise section. Then in the sediment element one places the second element and one makes joint, advantageously separable. The element, which is to be joined to the sediment element, one positions, during assembly in such position, that shorter sides with dimension of the element, which is to be placed in the sediment element take position parrallely towards a longer side of the profile of the sediment element in crosswise section.

In the first version, one makes assembly by means of using profiles having shapes of rectangles which have the same outer dimensions in crosswise section, moreover in each element the distance which makes an inner dimension measured on the longer side of the rectangle is equal to the outer dimension of the shorter side of the rectangle.

In the second version, one makes asembly by means of profiles of a rectangle shape of different outer dimensions in crosswise section, moreover each element which is placed in the sediment element, has width equal to distance which makes inner dimension measured on the longer side of the rectangle of the sediment element and height different from height of the sediment element.

A joining unit for assembly of constructions of a plane configuration and /or spatial, according the invention, **characterised in that** it comprises at least two elements of the same profiles in a crosswise section, having shape of rectangles, and in the joining unit being in assembled state, one of the elements is placed, advantageously separably, in the other element which makes a sediment element for this joint, moreover in the wall of the sediment element, from the side of the element, which is placed in the sediment element there is a through recess of dimensions corresponding to outer dimensions of element which is situated in the sediment element and the through recess is situated in the wall of the sediment element in such a way, that shorter sides of the recess with dimension take position parallely towards a longer side of the profile of the sediment element in crosswise section.

A joining unit, in the first version, **characterised in that** elements have the same dimensions in crosswise section, moreover in each element of the joining unit distance which makes inner dimension measured on the longer side of a rectangle is equal to the outer dimension of the shorter side of the rectangle.

A joining unit, in the second version, **characterised in that**, elements have different dimensions in crosswise section , moreover the width of the element which is placed in the sediment element is equal to distance which makes inner dimension measured on the longer side of the rectangle of the sediment element, and dimension of the longer side of the rectangle of the element, which is placed in the sediment element is different than dimension of the longer side in the sediment element.

A joining element for assembly of construction of plane configuration and/or spatial having a shape of a section of any length, having a through hole, **characterised in that**, in a crosswise section it has a shape of the rectangle with outer dimensions, moreover in this rectangle distance which is inner dimension measured on a longer side of the rectangle is equal to the outer dimension of a shorter side of the rectangle.

In the first version, there is a distance between inner splines, advantageously in a shape of forks, situated in corners of the rectangle, and in the second version, there is a distance between inner walls situated parallely towards outer walls which are situated , in a crosswise section, on a shorter side of a rectangle in a crosswise section.

Construction of joining unit, according to the invention, enables making construction of different configurations in an easy way within the range of height and width of construction and position and number of cross-bars, it is specially usefull during assembly of different kinds of shelving, stands and similar constructions e.g. furniture or stands which make obstacles for horses. In view of ease of assembly, joining of particular elements may be made by the same user without special tools. Dimension dependences within a rectangle enable mounting , advantegously separably one element into the other by putting an element in a recess and placing/mounting in a sediment element.

Forks or other splines which are in the corners on the whole lenght of mounting element enable screwing of screws after mounting of construction.

Construction of the joint causes arising of rigid angular joint of elements , it causes improvement of rigidity of arising construction in a plane configuration /and or spatial. It guarantees required rigidity without additional stiffening elements such as for example, angle struts , brackets and the like.

Important advantage of this joint is possibility of making the joint without using additional joining elements for example, screws, which makes assembly easy and labour saving and reduces costs of making of required construction.

A joining element, according to the invention is designed for assembly of constructions and at the same time it is an element of made construction plane and/or spatial.

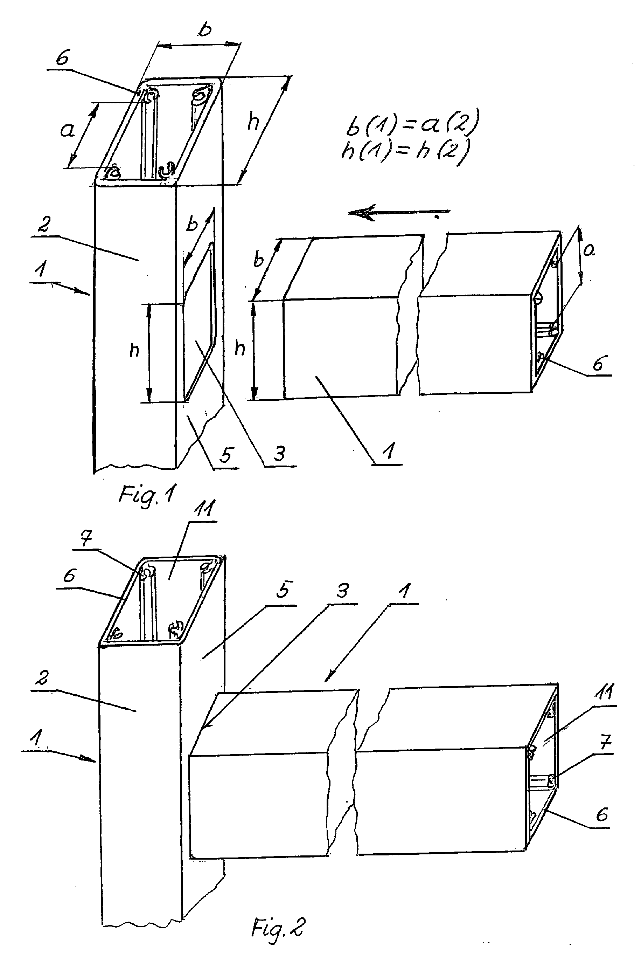

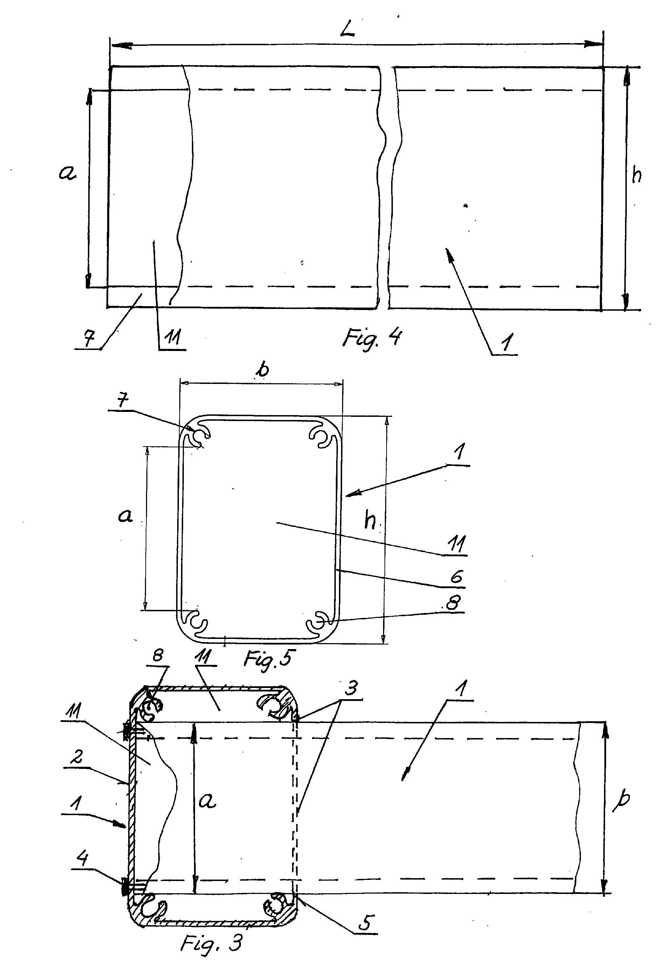

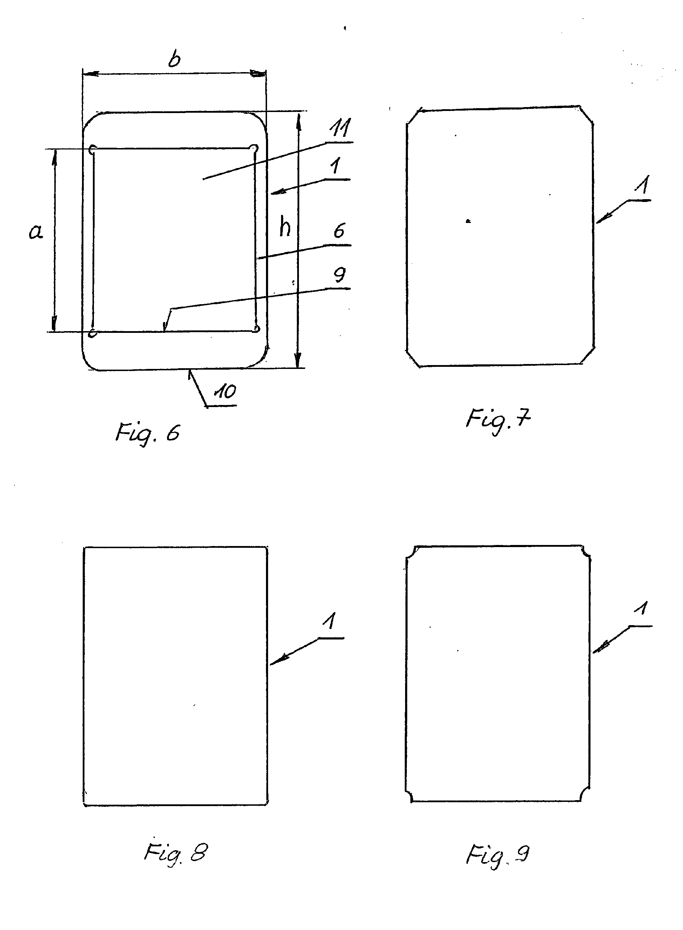

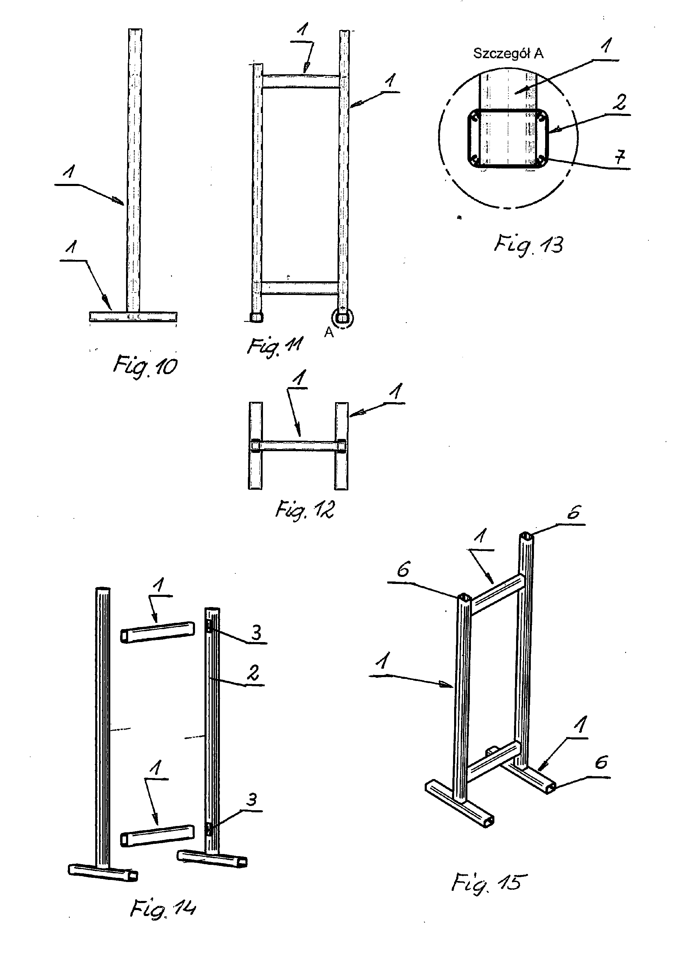

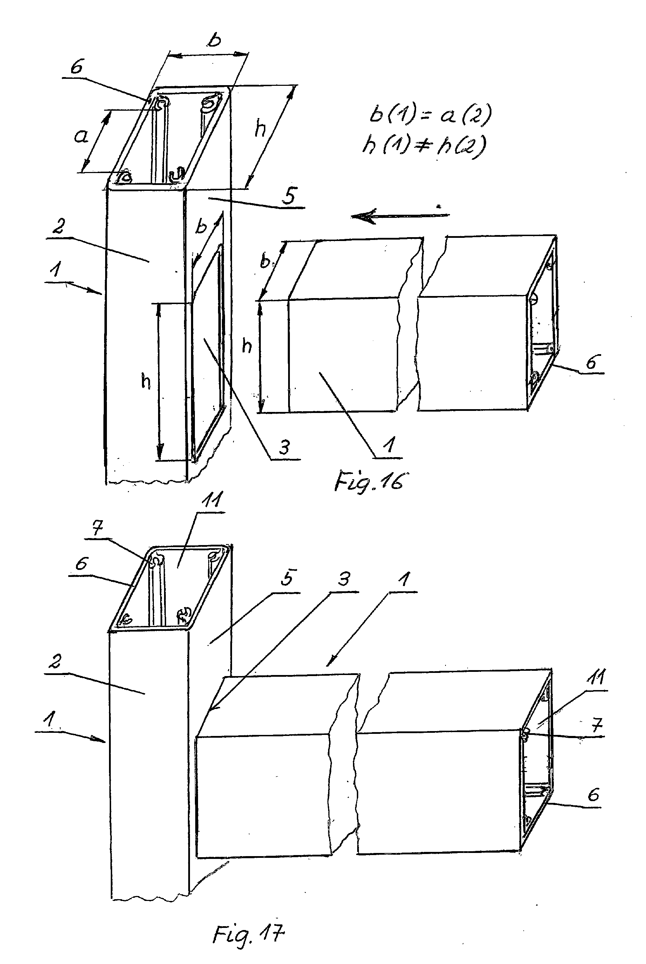

An object of the invention is shown by the example of the drawing, on which fig. 1 represents a joining unit during assembly in which joining elements have the same dimensions in crosswise section, fig.2 - a joining unit from fig. 1 in an assembled state in perspective view, fig.3 - a joining unit in an assembled state from above view, fig. 4 - an element from a side view, fig.5 - an element in front view, fig.6 - an element in another version in front view, fig.7 - an element with oblique corners in front view, fig.8 - an element with sharp corners, fig.9 - an element with concave corners , fig. 10 - a stand mounted by means of a way according to the invention from side view , fig. 11 - a stand from frontal view , fig. 12 *-* a stand from above view, fig. 13 - a detail A from fig. 10, fig. 14 - a stand before assembly in perspective view, fig. 15 - a stand mounted in perspective view, fig. 16 - a joining unit being mounted, in which joining elements have different dimensions in crosswise section , fig. 7 - a joining unit from fig. 16 in mounted state in perspective view.

Way of assembly of construction of a plane configuration and /or spatial according to the the invention relies on that one makes assembly by means of using at least two elements 1 of the same profiles in crosswise section. Elements 1 have , in crosswise section a shape of a rectangle 6 with the same overall dimensions h, b, and lenghts L corresponding to configuration being assembled. Before of joining elements 1, in a wall 5 of one element 1, which makes a sediment element 2, from the side a second element 1 is to be placed, one cuts a through recess 3 of dimensions corresponding to outer dimensions h , b of an element 1 in crosswise section , which is to be joined. The recess 3 one cuts out in such a way, that after cutting out it takes position , in which shorter sides of the recess 3 of dimension b are situated parrallely towards a longer side h of a profile of the sediment element 2 in a crosswise section. Then in the sediment element 2 one places the second element 1 and one makes separable joint . The element 1 , which is to be joined to the sediment element 2 , one positions , during assembly in such position, that shorter sides with dimension b of the element 1 , which is to be placed in the sediment element 2 take position parrallely towards a longer side h of the profile of the sediment element 2 in crosswise section.

After mounting an element 1 in the sediment element 2 , for efficiency of a joint e.g. for protection against undesirable dissasembly of the made joint, joined elements 1,2 one joins by means of screws 4 or other joining elements.

Depending on applied mounting clearance, one may make a joint of elements 1,2 with a free fit or slide fit or inteference fit .

In the way of assembly, in other version one makes assembly by means of profiles of rectangles shape 6 of different outer dimensions h , b in crosswise section. In this version each element 1 which is placed in the sediment element 2 , has width b equal to distance a which makes inner dimension measured on the longer side h of the rectangle 6 of the sediment element 2 and height h different from height of the sediment element 2 .

A joining unit for assembly of constructions of a plane configuration and /or spatial, according to the invention, comprises at least two elements 1, 2 of the same profiles in a crosswise section, having shape of rectangle 6 with same overall dimensions h , b in crosswise section.

In each element 1 of the joining unit distance a which makes inner dimension measured on the longer side h of a rectangle 6 is equal to the outer dimension b of the shorter side of the rectangle 6 . In made joint eg. in the joining unit being in assembled state, one of the elements 1 is placed , separably , in the other element 1 which makes a sediment element 2 for this joint. In the wall 5 of the sediment element 2 , from the side of element 1, which is placed in the sediment element 2 there is a through recess 3 of dimensions corresponding to outer dimensions h ,b of element 1 . The through recess 3 is situated in the wall 5 of the sediment element 2 in such a way, that shorter sides of the recess 3 with dimension b take position parallely towards a longer side h of the profile of the sediment element 2 in crosswise section.

In the joining unit in other version, elements 1 , 2 have different dimensions in crosswise section , moreover the width b of the element 1 which is placed in the sediment element 2 is equal to distance a which makes inner dimension measured on the longer side h of the rectangle 6 of the sediment element 2 , and dimension of the longer side h of the rectangle 6 of the element 1 , which is placed in the sediment element 2 is different than dimension of the longer side h in the sediment element 2 . A joining element for assembly of construction of plane configuration and/ or spatial according to the invention having a shape of a section of any length L , having a through hole 11 on the whole lenght of a section . Joining element, in a crosswise section has a shape of the rectangle 6 with outer dimensions h , b . In this rectangle 6 distance a which is inner dimension measured on a longer side h of the rectangle 6 is equal to the outer dimension b of a shorter side of the rectangle 6.

In the first version of a joining element, there is a distance a between inner splines 7, advantageously in a shape of forks 8, situated in corners of the rectangle 6. Forks 8 take position on the whole lenght L of a joining element.

In the second version of a joining element, there is a distance a between inner walls 9 situated parallely towards outer walls 10 which are , in a crosswise section , on a shorter side b of a rectangle 6 with outer dimension b . Inner walls 9 may be smooth or with grooves .

The rectangle 6 , which makes a profile of the element 1 and of the sediment element 2 may have sharp or rounded or cut corners. It may be made also in version with concave corners.

Elements 1, 2 may be joined with each other separably, as described above or non separably, for example by means of glue.

## Claims

1. Way of assembly of construction of a plane configuration and/or spatial, relying on placing one element into the other, **characterised in that**, one makes assembly by means of using, at least two elements ( 1 ) of the same profiles in a crosswise section, having shape of rectangles ( 6 ) of lengths ( L ) corresponding to configuration being assembled, in a wall ( 5 ) of one element ( 1 ), which makes a sediment element ( 2 ), from the side, in which the second element ( 1 ) is to be placed one cuts out a through recess ( 3 ) of dimensions corresponding to outer dimensions ( h , b ) of element ( 1 ), which is to be joined, moreover the recess ( 3 ) one cuts out in such a way, that after cutting out it takes position , in which shorter sides of the recess ( 3 ) of dimension ( b ) are situated parrallely towards a longer side ( h ) of a profile of the sediment element ( 2 ) in a crosswise section , then in the sediment element ( 2 ) one places the second element ( 1 ) and one makes joint, advantageously separable, moreover the element ( 1 ), which is to be joined to the sediment element ( 2 ) , one positions , during assembly in such position, that shorter sides with dimension ( b ) of the element ( 1 ), which is to be placed in the sediment element ( 2 ) take position parrallely towards a longer side ( h ) of the profile of the sediment element ( 2 ) in crosswise section.

2. Way, according to claim 1, **characterised in that**, one makes assembly by means of using profiles having a shape of rectangles ( 6 ) which have the same outer dimensions ( h, b ) in crosswise section, moreover in each element ( 1 , 2 ) the distance ( a ) which makes an inner dimension measured on the longer side ( h ) of the rectangle ( 6 ) is equal to the outer dimension ( b ) of the shorter side of the rectangle ( 6 ).

3. Way, according to claim 1, **characterised in that**, one makes assembly by means of using profiles having a shape of rectangles ( 6 ) of different outer dimensions ( h , b ) in crosswise section, moreover each element ( 1 ) which is placed in the sediment element ( 2 ), has width ( b ) equal to distance ( a ) which makes inner dimension measured on the longer side ( h ) of the rectangle ( 6 ) of the sediment element ( 2 ) and height ( h ) different from height ( h ) of the sediment element ( 2 ) .

4. A joining unit for assembly of constructions of a plane configuration and /or spatial , **characterised in that** , it comprises at least two elements ( 1, 2 ) of the same profiles in a crosswise section, having shape of rectangles ( 6 ), and in the joining unit being in assembled state, one of the elements ( 1 ) is placed, advantageously separably, in the other element ( 1 ) which makes a sediment element ( 2 ) for this joint, moreover in the wall ( 5 ) of the sediment element ( 2 ), from the side of element ( 1 ), which is placed in the sediment element ( 2 ) there is a through recess ( 3 ) of dimensions corresponding to outer dimensions ( h ,b ) of element ( 1 ) and the through recess ( 3 ) is situtuated in the wall ( 5 ) of the sediment element ( 2 ) in such a way, that shorter sides of the recess ( 3 ) with dimension ( b ) take position parallely towards a longer side ( h ) of the profile of the sediment element ( 2 ) in crosswise section.

5. A joining unit , according to claim 4, **characterised in that,** elements ( 1,2 ) have the same dimensions ( h , b ) in crosswise section, moreover in each element ( 1, 2 ) of the joining unit distance ( a ) which makes inner dimension measured on the longer side ( h ) of a rectangle ( 6 ) is equal to the outer dimension ( b ) of the shorter side of the rectangle ( 6 ).

6. A joining unit , according to claim 4, **characterised in that,** elements ( 1 , 2 ) have different dimensions in crosswise section, moreover the width ( b ) of the element ( 1 ) which is placed in the sediment element ( 2 ) is equal to distance ( a ) which makes inner dimension measured on the longer side ( h ) of the rectangle ( 6 ) of the sediment element ( 2 ), and dimension of the longer side ( h ) of the rectangle ( 6 ) of the element ( 1 ), which is placed in the sediment element ( 2 ) is different than dimension of the longer side ( h ) in the sediment element ( 2 ) .

7. A joining element for assembly of construction of plane configuration and/ or spatial which is a section of any length, having a through hole , **characterised in that** , in a crosswise section it has a shape of the rectangle ( 6 ) with outer dimensions ( h , b ) , moreover in this rectangle ( 6 ) distance ( a ) which is inner dimension measured on a longer side ( h ) of the rectangle ( 6 ) is equal to the outer dimension ( b ) of a shorter side of the rectangle (6).

8. An element, according to claim 7 , **characterised in that**, there is a distance ( a ) between inner splines ( 7 ), advantageously in a shape of forks ( 8 ) , situated in corners of the rectangle ( 6 ).

9. An element, according to claim 7, **characterised in that** , there is a distance ( a ) between inner walls ( 9 ) situated parallely towards outer walls ( 10 ) which are situated , in a crosswise section , on a shorter side ( b ) of a rectangle ( 6 ) in a crosswise section.
